# FASCICULE DE BREVET EUROPEEN

(11) **EP 0 751 531 B1**
(45) Date de publication et mention de la délivrance du brevet: **14.04.1999**
(21) Numéro de dépôt: 96401338.7
(22) Date de dépôt: 19.06.1996
(51) Int. Cl.: G21C 17/10

(54) **Elément de raccordement pour un dispositif de mesure d'au moins un paramètre physique à l'intérieur du coeur d'un réacteur nucléaire**
Verbindungselement für eine Vorrichtung zur Messung wenigstens eines physikalischen Parameters innerhalb des Kerns eines nuklearen Reaktors
Connecting element for an apparatus for measuring at least one physical parameter within a nuclear reactor core

(30) Priorité: 30.06.1995 FR 9507938
(43) Date de publication de la demande: 02.01.1997
(73) Titulaire: FRAMATOME, 92400 Courbevoie (FR)
(72) Inventeur: Malmasson, Jacques, 91000 Evry (FR)
(74) Mandataire: Bouget, Lucien

(56) Documents cités:
- EP-A- 0 265 840
- EP-A- 0 393 367
- EP-A- 0 577 453
- DE-A- 2 817 830
- DE-A- 4 303 746

## Description

L'invention concerne un élément de raccordement pour un dispositif de mesure d'au moins un paramètre physique, tel que la température ou le flux neutronique, à l'intérieur du coeur d'un réacteur nucléaire et plus particulièrement d'un réacteur nucléaire refroidi par de l'eau sous pression.

Les réacteurs nucléaires à eau sous pression comportent un coeur formé d'assemblages de forme prismatique disposés verticalement et reposant sur une plaque de support, à l'intérieur de la cuve du réacteur nucléaire.

Pendant le fonctionnement du réacteur nucléaire, il est nécessaire de réaliser périodiquement des mesures de flux neutronique ou de température à l'intérieur même du coeur. On utilise pour cela des détecteurs à fission de très petites dimensions ou des thermocouples qui peuvent être déplacés par commande à distance à l'aide de câbles téléflex à l'intérieur de tubes fermés à l'une de leurs extrémités, appelés doigts de gant. Les doigts de gant sont introduits suivant une répartition prédéterminée dans certains assemblages du coeur, après passage à l'intérieur d'un conduit de guidage d'instrumentation. Chacun des conduits de guidage d'instrumentation comporte un tube de guidage reliant un local de mesure au fond de la cuve du réacteur nucléaire, par l'intermédiaire d'une manchette de traversée du fond et un canal vertical traversant les équipements internes inférieurs du réacteur, dans l'alignement du tube-guide vertical de l'assemblage combustible dans lequel on introduit le doigt de gant.

Par déplacement des détecteurs de flux à l'intérieur des doigts de gant placés dans des assemblages de combustible du coeur, on peut effectuer des mesures de flux suivant toute la hauteur du coeur.

Il est également possible d'introduire, à l'intérieur d'un doigt de gant, un ensemble de capteurs constitués par des détecteurs de flux neutronique ou des capteurs de mesure de la température qui sont fixés dans des dispositions espacées suivant la longueur d'un câble de mesure qui est introduit à l'intérieur du doigt de gant ou d'une gaine fermée analogue à un doigt de gant. Les détecteurs de flux ou de température, solidaires du câble de mesure, sont ainsi placés à l'intérieur du coeur, dans des dispositions fixes étagées suivant la hauteur du coeur.

Il est donc possible d'effectuer des mesures à l'intérieur du coeur en divers points suivant toute la hauteur du coeur, en utilisant soit des sondes fixes soit des sondes mobiles.

Les conduits de guidage qui sont reliés au fond de cuve sont en communication avec le volume intérieur de la cuve qui renferme de l'eau de refroidissement sous pression et à très haute température et permettent le passage d'un conduit de mesure dont une partie pénètre dans le coeur du réacteur nucléaire. Les conduits de mesure doivent pouvoir être déplacés à l'intérieur des conduits de guidage, par exemple pour réaliser leur extraction des assemblages du coeur ou leur extraction complète des conduits de guidage, dans le cas où un remplacement est nécessaire. Il subsiste un jeu radial relativement important entre le conduit de mesure en forme de doigt de gant et le conduit de guidage, permettant les déplacements des conduits de mesure à l'intérieur des conduits de guidage. De l'eau sous pression de refroidissement du réacteur remplit l'espace annulaire ménagé entre la surface intérieure du conduit de guidage et la surface extérieure du doigt de gant qui est donc soumise à un fluide à très haute température et à très haute pression. En outre, l'extrémité ouverte du doigt de gant, à l'opposé de l'extrémité engagée à l'intérieur du coeur du réacteur nucléaire doit être accessible depuis le local de mesure du réacteur nucléaire. Dans le cas de l'utilisation de sondes mobiles, les sondes sont engagées à l'intérieur du doigt de gant et déplacées depuis le local de mesure. Les sondes de mesure sont fixées à un élément flexible sur lequel on exerce une traction ou une poussée pour les déplacer. Les signaux de mesure sont récupérés et traités à l'intérieur du local de mesure. On utilise un ensemble de déplacement et de mesure permettant de réaliser un déplacement contrôlé des sondes mobiles et une récupération et un traitement des signaux de mesure. Dans le cas de l'utilisation de sondes fixes, ces sondes sont reliées à un câble de mesure qui doit être raccordé à l'intérieur du local de mesure à un ensemble de traitement des signaux.

Dans tous les cas, il est nécessaire d'avoir accès à l'extrémité ouverte du doigt de gant logé dans le conduit de guidage. Le conduit de guidage comporte un dispositif de passage étanche du doigt de gant, sur une partie d'extrémité disposée dans le local de mesure. Ce dispositif de passage étanche du doigt de gant, généralement appelé buselure, comporte des ensembles de joints permettant de réaliser l'étanchéité autour de la surface de l'extrémité du doigt de gant à sa sortie du conduit de guidage. La buselure comporte une extrémité amont par laquelle pénètre l'extrémité du doigt de gant et une extrémité aval à laquelle est généralement raccordé un prolongateur du doigt de gant permettant d'assurer la jonction entre la buselure et l'ensemble de déplacement et de récupération de signaux de mesure des sondes.

L'extrémité du conduit de mesure ou doigt de gant est fixée par soudure sur une partie du prolongateur par l'intermédiaire de laquelle on réalise la liaison entre le doigt de gant et la buselure. La buselure comporte un écrou prévu pour venir en appui sur un épaulement du prolongateur pour assurer sa fixation sur la buselure.

Lorsqu'on désire déplacer les doigts de gant à l'intérieur des conduits de guidage, par exemple pour extraire les doigts de gant des assemblages de combustible avant un rechargement, on démonte l'écrou de la buselure et on exerce une traction sur le prolongateur du doigt de gant. Le doigt de gant peut être remis en place à l'intérieur du conduit de guidage par poussée sur le prolongateur.

Dans le cas où l'on veut effectuer une réparation d'une partie du conduit de guidage, par exemple une réparation ou un remplacement de la buselure fixée sur le conduit de guidage, il peut être nécessaire d'extraire entièrement le doigt de gant du conduit de guidage. L'extraction du doigt de gant à l'intérieur du local de mesure du réacteur nucléaire est une opération délicate du fait que le doigt de gant présente une très grande longueur et une activation qui peut être forte, après un certain temps de séjour dans le réacteur nucléaire en fonctionnement. Il est généralement nécessaire d'éliminer le doigt de gant par découpage à l'intérieur du local de mesure et stockage des tronçons du doigt de gant dans un conteneur. Préalablement à cette opération d'élimination du doigt de gant, il est nécessaire de séparer le doigt de gant de son prolongateur par un usinage de la soudure de liaison entre le doigt de gant et le prolongateur.

On a également proposé, pour effectuer une réparation sur un élément du conduit de guidage tel que la buselure, de séparer le doigt de gant de son prolongateur et de déplacer le doigt de gant vers l'amont à l'intérieur du conduit de guidage, c'est-à-dire en direction de la cuve du réacteur nucléaire, de manière que l'extrémité du doigt de gant qui a été séparée préalablement du prolongateur se trouve, à l'issue du déplacement, en amont du dispositif à remplacer ou à réparer. Il est également nécessaire d'effectuer un bouchage étanche de l'extrémité ouverte du doigt de gant et de l'espace annulaire entre le doigt de gant et le conduit de guidage dans une zone située en amont du dispositif à réparer ou à remplacer.

Pour effectuer ces différentes opérations de déplacement du doigt de gant et de bouchage, on utilise un outillage qui peut être manipulé depuis le local de mesure du réacteur nucléaire.

Le procédé et l'outillage utilisés ont fait l'objet d'une demande de brevet au nom des Sociétés FRAMATOME et ATEA, Société Atlantique de Techniques Avancées déposée le même jour que la présente demande.

Pour la mise en oeuvre du procédé, il reste cependant nécessaire de séparer le doigt de gant de son prolongateur ou d'une pièce de liaison au prolongateur par une opération d'usinage qui présente des inconvénients du fait qu'on produit des copeaux d'usinage dans le local de mesure du réacteur nucléaire. En outre, cette opération peut être relativement longue et délicate ; lors de la remise en service du doigt de gant, il est nécessaire de réaliser une nouvelle soudure d'un prolongateur à l'extrémité du doigt de gant.

On connaît également un procédé décrit dans le EP-A-0 577 453 au nom de la Société FRAMATOME qui permet de modifier légèrement la position de service d'un doigt de gant à l'intérieur d'un conduit de guidage pour déplacer les zones d'usure préférentielles du doigt de gant à l'intérieur du réacteur nucléaire, suivant la longueur du doigt de gant. On accroît ainsi la durée de vie du doigt de gant.

Dans le EP-A-0 577 453, on prévoit un dispositif pour modifier la position axiale du doigt de gant à l'intérieur du conduit de guidage qui comporte un prolongateur du doigt de gant d'une forme particulière ayant un alésage taraudé permettant de recevoir une pièce filetée fixée à l'extrémité du doigt de gant, qui est vissée à l'intérieur du prolongateur. En utilisant des prolongateurs ayant une ouverture taraudée de longueur adaptée et éventuellement, une ou plusieurs entretoises engagées autour du doigt de gant, on peut faire varier la position du doigt de gant à l'intérieur du conduit de guidage. Un tel dispositif nécessite la présence d'un élément fileté rapporté et soudé à l'extrémité du doigt de gant.

Dans le cas de l'utilisation de capteurs en position fixe à l'intérieur du coeur du réacteur nucléaire, ces capteurs étant fixés sur un élément cylindrique tel qu'un câble engagé dans une gaine analogue à un doigt de gant, les buselures de passage de doigts de gant selon l'art antérieur ne permettent pas d'assurer de manière simple le raccordement du câble de mesure à un ensemble de mesure à l'intérieur du local du réacteur nucléaire ainsi qu'une parfaite étanchéité autour de l'élément cylindrique permettant d'éviter toute entrée d'eau de refroidissement du réacteur nucléaire dans le local de mesure, dans le cas d'une fissuration du doigt de gant.

Le but de l'invention est de proposer un élément de raccordement pour un dispositif de mesure d'au moins un paramètre physique à l'intérieur du coeur d'un réacteur nucléaire comportant un conduit de mesure de forme allongée, un conduit de guidage du conduit de mesure entre un local de mesure et le coeur du réacteur nucléaire disposé à l'intérieur d'une cuve, un moyen de passage étanche du conduit de mesure à une extrémité du conduit de guidage situé dans le local de mesure, un ensemble de traitement des mesures et un élément cylindrique prolongeant le conduit de mesure disposé entre le moyen de passage étanche du conduit de mesure et l'ensemble de traitement des mesures, caractérisé par le fait que ledit élément effectue le raccordement d'une partie d'extrémité du conduit de mesure à l'élément prolongateur comportant un corps constitué par un manchon tubulaire comprenant suivant son axe, un premier alésage de réception de la partie d'extrémité du conduit de mesure présentant une surface lisse cylindrique, s'étendant entre une première extrémité axiale du manchon et un épaulement à l'intérieur du manchon, un second alésage de réception de l'élément cylindrique s'étendant jusqu'à la seconde extrémité axiale du manchon, un premier moyen démontable de fixation et de passage étanche du conduit de mesure à la première extrémité du manchon pour assurer le passage étanche du conduit de mesure dans le premier alésage du manchon et un second moyen démontable de fixation et de passage étanche à la seconde extrémité du manchon pour assurer le passage étanche de l'élément cylindrique dans le second alésage du manchon.

Afin de bien faire comprendre l'invention, on va maintenant décrire, à titre d'exemple non limitatif, en se référant aux figures jointes en annexe, un dispositif de mesure suivant l'invention et suivant plusieurs variantes de réalisation.

La figure 1 est une vue schématique en élévation et en coupe partielle de la cuve d'un réacteur nucléaire à eau sous pression et d'un dispositif de mesure de paramètres physiques à l'intérieur du coeur du réacteur nucléaire.

La figure 2 est une vue en élévation latérale d'une partie des éléments d'un conduit de guidage du dispositif de mesure placé à l'intérieur du local de mesure.

La figure 3 est une vue en coupe à plus grande échelle d'une partie du conduit de guidage représenté sur la figure 2 assurant le passage étanche d'un conduit de mesure et le raccordement d'un prolongateur suivant l'art antérieur.

La figure 4 est une vue en coupe analogue à la vue de la figure 3 d'une partie d'un conduit de guidage d'un dispositif de mesure suivant l'invention.

La figure 5 est une vue en coupe d'un élément de raccordement et de fixation d'un dispositif de mesure suivant l'invention et suivant un premier mode de réalisation.

La figure 6 est une vue en coupe d'un élément de raccordement et de fixation d'un dispositif de mesure suivant l'invention et suivant un second mode de réalisation.

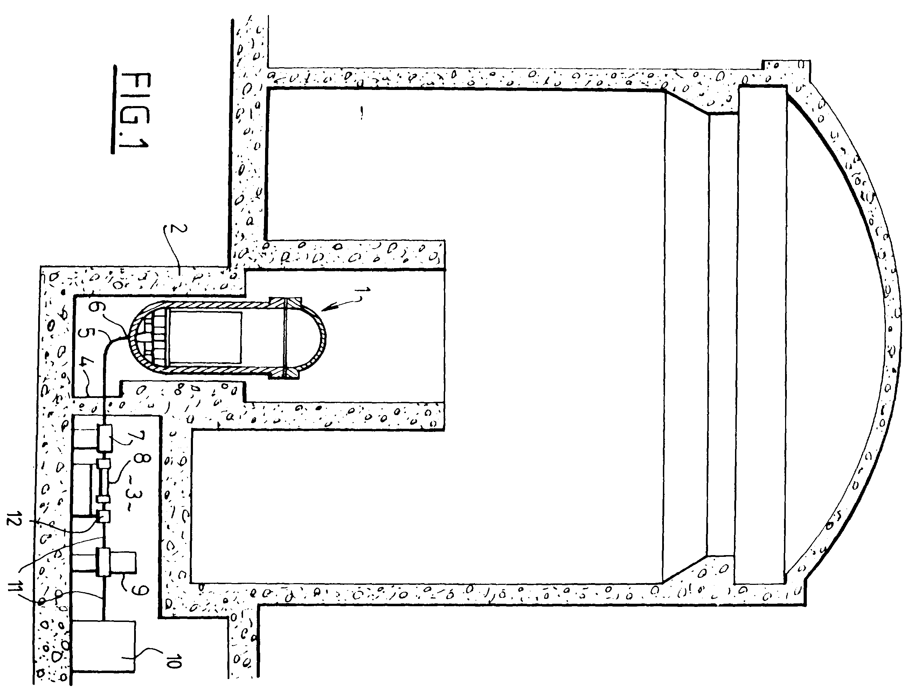

Sur la figure 1, on voit la cuve 1 d'un réacteur nucléaire à eau sous pression disposée à l'intérieur d'un puits de cuve 2 constituant une partie de la structure en béton du réacteur nucléaire.

Un local de mesure 3 entouré par des parois en béton est disposé latéralement par rapport au puits de cuve 2. L'une des parois latérales 4 du local 3 sépare ce local du puits de cuve 2. Des conduits de guidage d'instrumentation tels que 5 sont reliés à l'une de leurs extrémités à une manchette 6 verticale de traversée du fond de la cuve 1 et assurent la liaison entre le fond de la cuve 1 et le local d'instrumentation 3 dans lequel chacun des conduits de mesure 5 pénètre dans une direction horizontale. Sur le prolongement horizontal de chacun des conduits de guidage 5 à l'intérieur du local 3 sont disposés, successivement, à partir de la paroi de traversée 4 du local 3, une vanne manuelle 7, une buselure 8 de passage étanche d'un doigt de gant introduit dans le conduit de guidage 5 et une vanne automatique 9.

La buselure 8 assure le passage étanche d'un doigt de gant qui est relié à la sortie de la buselure 8, à un prolongateur de doigt de gant 12 assurant le passage d'un élément cylindrique 11 entre la buselure 8 et un ensemble de mesure et de déplacement 10.

Dans le cas de l'utilisation de sondes mobiles, l'élément cylindrique 11 présente une forme tubulaire qui permet d'assurer le passage des sondes mobiles fixées à l'extrémité d'un câble téléflex à l'intérieur du doigt de gant s'étendant suivant la longueur du conduit de guidage 5. Dans ce cas, l'ensemble de mesure 10 comporte des moyens de déplacement des sondes à l'intérieur des tubes de guidage et des moyens de recueil des signaux de mesure de chacune des sondes.

Dans le cas de l'utilisation de sondes fixes, l'élément cylindrique 11 est un câble de mesure sur lequel sont fixées les sondes qui sont introduites en position fixe à l'intérieur du doigt de gant placé dans le coeur du réacteur nucléaire.

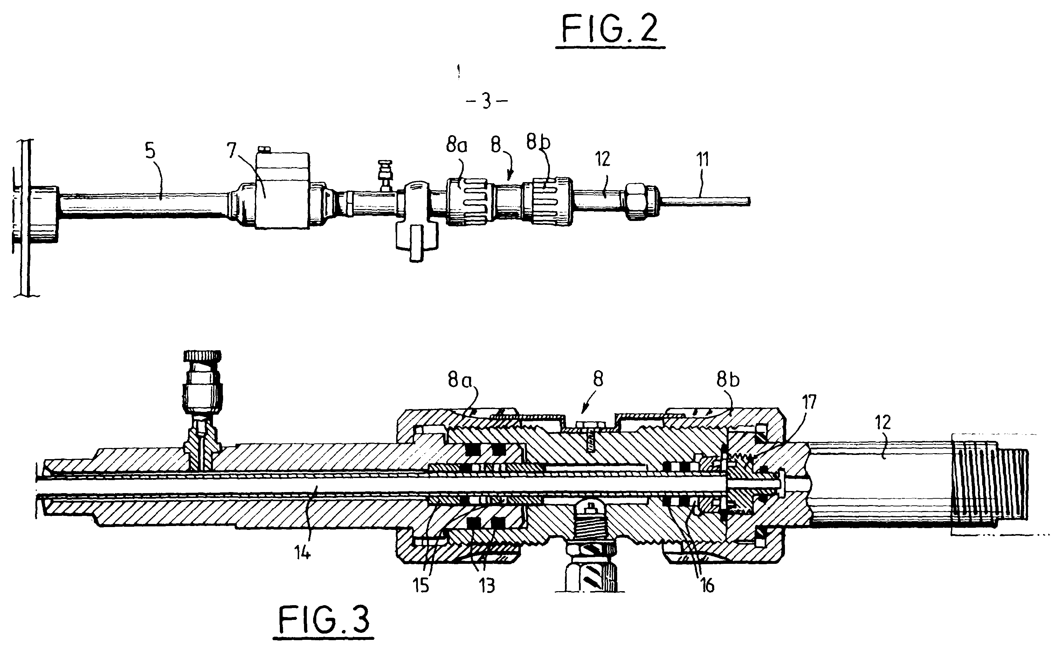

Sur la figure 2, on a représenté plus en détail les éléments disposés sur le conduit de guidage 5 à l'intérieur du local de mesure 3.

La buselure 8 qui est représentée sur les figures 2 et 3 permettant le passage étanche d'un doigt de gant 14 comporte un corps de buselure fileté à ses extrémités sur lesquelles sont engagés des écrous 8a et 8b. L'écrou 8a permet de raccorder une pièce de liaison du conduit de guidage 5 au corps de la buselure 8, à la sortie de la vanne manuelle 7. Un ensemble de joints d'étanchéité 13 est intercalé entre la pièce de liaison du conduit 5 et le corps de la buselure 8. De plus, une garniture d'étanchéité 15 est disposée autour du doigt de gant 14 pour permettre son passage étanche à l'intérieur du corps de la buselure 8.

Le second écrou 8b de la buselure 8 permet de fixer le prolongateur de doigt de gant 12 à la sortie du corps de la buselure 8.

La buselure représentée sur la figure 3 et le doigt de gant 14 dont la buselure 8 assure le passage étanche à l'intérieur du local de mesure 3 sont réalisés suivant la disposition décrite dans le EP-A-0 577 453. L'extrémité ouverte du doigt de gant 14 est reliée par soudage à une pièce de liaison 17 filetée extérieurement. Le prolongateur 12 comporte un alésage taraudé permettant le vissage du prolongateur sur la pièce de liaison filetée 17 fixée à l'extrémité du doigt de gant 14.

Il est possible de modifier la position initiale du doigt de gant 14 à l'intérieur du conduit de guidage, de manière à modifier la position des zones d'usure du doigt de gant dans le réacteur en service, en utilisant des prolongateurs dont l'alésage taraudé présente une profondeur variable.

Une garniture d'étanchéité 16 est disposée autour du doigt de gant de manière à assurer une étanchéité entre la partie de sortie du doigt de gant et le corps de la buselure 8.

Le dispositif qui vient d'être décrit qui permet de mettre en oeuvre un procédé d'exploitation d'un dispositif de mesure à l'intérieur du coeur d'un réacteur nucléaire avec limitation de l'usure des doigts de gant nécessite l'utilisation de prolongateurs adaptés à chacune des positions choisies pour le doigt de gant à l'intérieur du conduit de guidage. Il est des plus nécessaire d'utiliser des entretoises de blocage axial de l'extrémité du doigt de gant, dans le cas de prolongateurs dont l'alésage présente une longueur supérieure à la longueur de la pièce de liaison 17. Le montage du prolongateur est donc relativement complexe.

En outre, le doigt de gant 14 doit comporter à son extrémité une pièce de liaison filetée dont le diamètre est sensiblement supérieur au diamètre extérieur de la partie lisse du doigt de gant introduite dans le conduit de guidage.

Dans le cas où il est nécessaire d'effectuer une opération telle que le changement des joints des garnitures d'étanchéité de la buselure 8 ou encore une réparation ou un remplacement de la buselure ou d'un autre dispositif placé sur le conduit de guidage, par exemple la vanne manuelle 7, il faut soit extraire le doigt de gant du conduit de guidage, ce qui présente beaucoup d'inconvénients, comme il a été expliqué plus haut, ou recourir à un procédé dans lequel on déplace le doigt de gant vers l'amont à l'intérieur du conduit de guidage et on réalise le bouchage du doigt de gant et de l'espace annulaire entre le doigt de gant et le conduit de guidage. Pour mettre en oeuvre un tel procédé, il faut usiner l'extrémité du doigt de gant 14 pour le séparer de la pièce de liaison 17 avec le prolongateur 12. Une telle opération réalisée à l'intérieur du local de mesure du réacteur nucléaire présente des inconvénients.

En outre, dans le cas où l'on utilise un dispositif de mesure comportant des sondes fixes qui sont introduites à l'intérieur d'une gaine analogue au doigt de gant 14, le dispositif connu de l'art antérieur et représenté sur la figure 3 ne permet pas de réaliser une étanchéité autour du câble de mesure, de sorte que dans le cas d'une fissuration de la gaine en forme de doigt de gant, l'eau sous pression de refroidissement du réacteur qui pénètre à l'intérieur de la gaine peut s'écouler à l'intérieur du local de mesure du réacteur nucléaire.

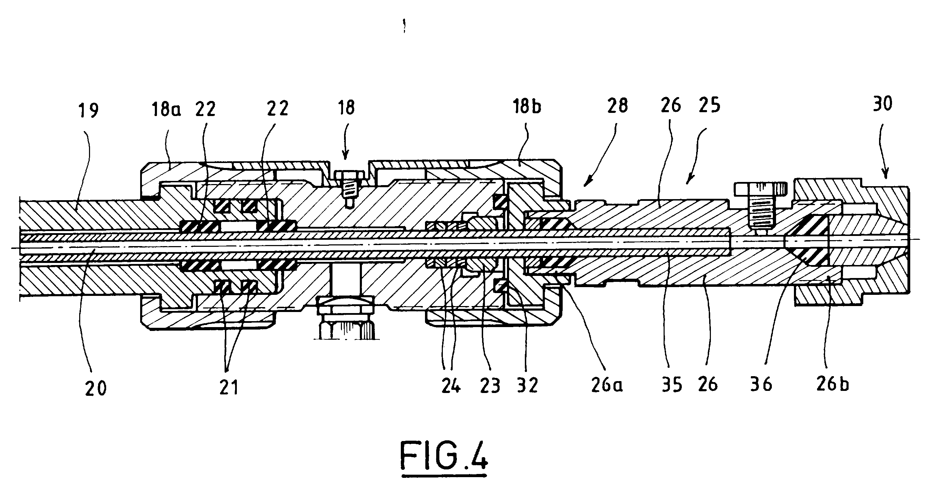

Sur la figure 4, on a représenté une partie d'un dispositif de mesure suivant l'invention comportant une buselure 18 de passage étanche d'un doigt de gant 20 à la sortie d'un conduit de guidage 19, à l'intérieur du local de mesure du réacteur nucléaire.

La buselure 18 est pratiquement analogue à la buselure 8 du dispositif suivant l'art antérieur représenté sur la figure 3. La buselure 18 comporte un corps de buselure fileté à ses extrémités et deux écrous de serrage 18a et 18b.

La partie de sortie du conduit de guidage 19 est constituée par une pièce de jonction tubulaire entre une vanne manuelle de fermeture du conduit de guidage et le corps de la buselure 18.

Des joints d'étanchéité 21 sont intercalés entre la pièce de liaison du conduit de guidage 19 et le corps de la buselure 18. Une garniture d'étanchéité 22 est disposée autour d'une partie du doigt de gant 20 à sa sortie du conduit de guidage 19. Une seconde garniture d'étanchéité 24 est disposée autour du doigt de gant 20, au niveau de la partie de sortie de l'alésage du corps de la buselure 18. Les joints de la garniture d'étanchéité 24 sont maintenus et serrés à l'intérieur du corps de la buselure 18 et autour du doigt de gant 20, par un écrou de serrage 23 vissé à l'intérieur d'une ouverture taraudée constituant la partie d'extrémité de sortie de l'alésage du corps de la buselure 18. On assure ainsi un passage étanche du doigt de gant 20, dans le local de mesure, à la sortie du conduit de guidage 19.

Selon l'invention, le dispositif de mesure comporte de plus, pour chacun des conduits de guidage recevant un doigt de gant, un élément de raccordement 25 permettant d'assurer la liaison entre l'extrémité entièrement lisse du doigt de gant 20, à la sortie de la buselure 18 et un élément cylindrique quelconque qui peut être un conduit prolongateur du doigt de gant ou un câble de mesure.

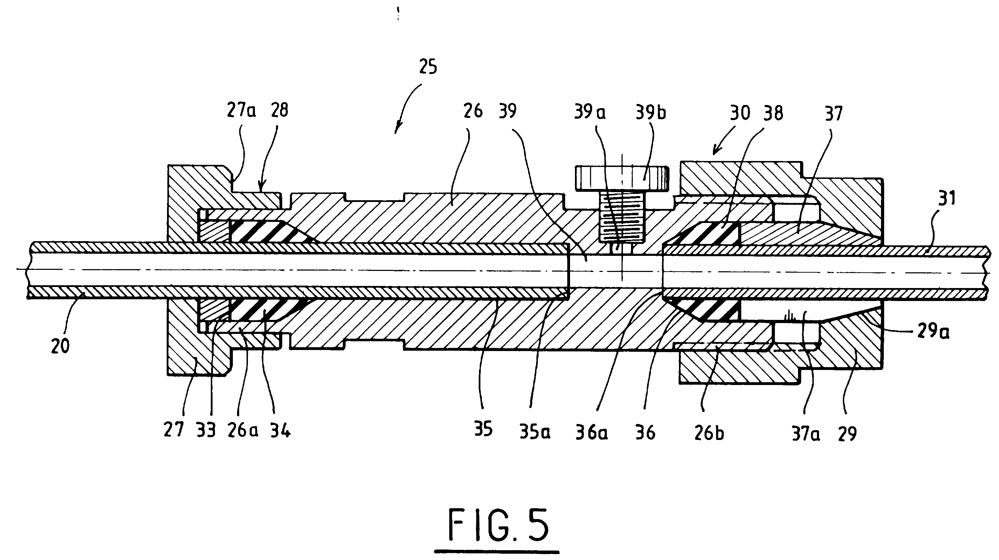

L'élément de raccordement 25 sera décrit en se référant aux figures 4 et 5.

L'élément de raccordement 25 comporte un corps 26 de forme tubulaire constituant un manchon traversé sur toute sa longueur par un alésage central.

Le manchon 26 comporte à ses extrémités deux parties filetées 26a et 26b. La partie filetée 26a du manchon 26 est destinée à recevoir un écrou de serrage 27 d'un dispositif de fixation et de passage étanche 28 du doigt de gant 20.

La partie filetée 26b du manchon 26 est destinée à recevoir un écrou 29 d'un dispositif de fixation et de passage étanche 30 d'un élément cylindrique lisse 31 qui est constitué par un tube prolongateur du doigt de gant 20 présentant un diamètre identique au diamètre du doigt de gant.

Dans le cas du mode de réalisation représenté sur les figures 4 et 5, le tube prolongateur 31 du doigt de gant est relié à son extrémité opposée au manchon 26, à un ensemble de mesure et de déplacement permettant d'introduire des sondes à l'intérieur du tube 31 et par son intermédiaire à l'intérieur du doigt de gant 20.

L'écrou 27 vissé sur la partie d'extrémité 26a du manchon 26 comporte une surface plane externe venant en appui sur un joint d'étanchéité 32 logé dans une gorge usinée sur la face d'extrémité de sortie du corps de la buselure 18. L'écrou 27 comporte un épaulement 27a sur lequel vient s'engager un épaulement correspondant de l'écrou 18b de la buselure 18 pour assurer la fixation et le serrage de l'écrou 27 contre la face de sortie du corps de la buselure 18. On obtient ainsi une fixation étanche de l'élément de raccordement contre le corps de la buselure 18.

L'alésage du manchon 26 de l'élément de raccordement 25 comporte une partie d'entrée à grand diamètre, en vis-à-vis de la partie filetée 26a de la surface extérieure du manchon 26 à l'intérieur de laquelle sont logés les éléments de la garniture d'étanchéité du moyen de fixation et de passage étanche 28. La garniture d'étanchéité comporte une bague 33 et un joint d'étanchéité 34 de forme cylindro-tronconique venant en appui à l'une de ses extrémités, sur une portée tronconique constituant l'extrémité de la partie d'entrée à grand diamètre de l'alésage du manchon 26. L'extrémité du joint 34 opposée à la portée tronconique constitue une face d'appui plane de la rondelle 33.

De préférence, la rondelle 33 est en acier inoxydable et le joint 34 en graphite.

La face de la bague 33 opposée au joint 34 est en appui sur un épaulement interne de l'écrou 27 qui permet de réaliser le serrage du joint 34 par l'intermédiaire de la bague 33, lors de son vissage sur la partie filetée 26a du manchon 26.

L'alésage du manchon 26 comporte, à la suite de la partie à grand diamètre dans laquelle est logée la garniture d'étanchéité 33, 34, une partie lisse cylindrique 35 dont le diamètre est pratiquement égal au diamètre extérieur du doigt de gant 20 ou légèrement supérieur à ce diamètre. La partie 35 de l'alésage se termine par un épaulement 35a à l'intérieur du corps de la buselure 26.

Pour réaliser la fixation et le passage étanche de la partie d'extrémité du doigt de gant 20 à l'intérieur du manchon 26, la partie d'extrémité du doigt de gant 20 totalement lisse est introduite à l'intérieur de l'alésage 35, jusqu'au moment où son extrémité vient en butée contre l'épaulement 35a. On réalise alors le serrage de l'écrou 27 sur la partie filetée 26a du manchon 26 pour assurer le serrage du joint 34 venant en butée contre la partie tronconique de la partie d'entrée de l'alésage du manchon 26, contre la surface extérieure du doigt de gant 20 et dans l'alésage du manchon 26. On réalise ainsi une étanchéité entre le doigt de gant et le manchon 26 de l'élément de raccordement 25. Dans le cas où le doigt de gant 20 se trouve percé ou fissuré à l'intérieur du réacteur nucléaire, il ne se produit pas de fuite de fluide de refroidissement au niveau de la partie de fixation et de passage étanche du doigt de gant 20 dans la partie d'entrée de l'élément de raccordement 25.

L'alésage central du manchon 26 comporte une partie de sortie 36 à grand diamètre, de forme cylindro-tronconique au niveau de la partie filetée 26b du manchon 26. L'alésage 36 se termine, à l'intérieur du manchon 26, par un épaulement 36a.

L'alésage 36 constitue le logement de la partie d'extrémité de l'élément cylindrique 31 de prolongation du doigt de gant 20 et de la garniture d'étanchéité du dispositif 30 de fixation et de passage étanche de l'élément cylindrique.

La garniture d'étanchéité du dispositif de passage étanche 30 comporte une pièce de serrage cylindro-tronconique 37 et un joint d'étanchéité de forme cylindro-tronconique 38.

L'écrou de serrage 29 du dispositif de fixation et de passage étanche 30 comporte un alésage interne tronconique 29a destiné à venir en appui sur une partie tronconique de la pièce de serrage 37.

Une partie d'extrémité tronconique du joint d'étanchéité 38 vient en butée contre une portée tronconique de l'alésage 36 autour de l'épaulement 36a.

La pièce de serrage 37 comporte une fente 37a suivant toute son épaisseur et suivant toute sa longueur dans la direction axiale, de manière à constituer un mandrin de serrage de l'élément cylindrique 31, lorsqu'on exerce un effet de serrage par l'intermédiaire de la portée tronconique 29a de l'écrou 29.

Pour assurer la fixation et le passage étanche de l'extrémité de l'élément cylindrique 31 dans la partie de sortie du manchon 26, on engage la partie d'extrémité de l'élément cylindrique 31 dans l'alésage 36 jusqu'au moment où l'élément cylindrique 31 vient en butée contre l'épaulement 36a. Le joint 38 de la garniture d'étanchéité pénètre à l'intérieur de la partie élargie de l'alésage 36 et la pièce de serrage 37 est mise en appui contre l'extrémité plane du joint 38. On serre l'écrou 29, de manière à serrer et à comprimer le joint 38 autour de la partie d'extrémité de l'élément cylindrique 31. De plus, le serrage de l'écrou 29 permet de serrer la pièce 37 contre la surface extérieure de l'élément cylindrique 31 pour assurer sa fixation dans la partie de sortie de l'élément de raccordement 25.

Dans la partie centrale du manchon 26, un alésage 39 dont le diamètre est inférieur au diamètre des alésages 35 et 36 est mis en communication par un canal latéral 39a, avec un détecteur de fuite 39b qui peut être vissé dans un trou taraudé traversant la paroi du manchon 26, dans le prolongement du canal 39a. Le détecteur de fuite 39b peut être constitué par exemple par un pressostat qui peut détecter une élévation de pression dans l'alésage 39 du manchon communiquant avec l'alésage interne du doigt de gant 20, dans le cas où le doigt de gant se trouve percé ou fissuré à l'intérieur du réacteur nucléaire.

Lorsque le doigt de gant ne présente ni perçage ni fissure, la pression dans l'alésage 39 est égale à la pression atmosphérique ; dans le cas où de l'eau sous pression de refroidissement du réacteur pénètre à l'intérieur du doigt de gant et dans l'alésage 39, le détecteur de fuite 39b détecte une brusque de variation de pression. On peut alors prendre les mesures nécessaires pour éviter que la fuite du doigt de gant n'entraîne des conséquences dommageables.

Le dispositif de mesure suivant l'invention comportant un élément de raccordement 25 tel que représenté sur les figures 4 et 5 permet de réaliser de manière simple, la séparation de l'extrémité du doigt de gant 20 de l'élément tubulaire du prolongateur 31. En effet, par dévissage de l'écrou 27, on peut séparer l'élément de raccordement et le conduit prolongateur 31 du doigt de gant 20 qui comporte une partie d'extrémité entièrement lisse introduite à l'intérieur de l'alésage 35.

Il est également possible, bien entendu, de séparer le conduit de prolongation 31 de l'élément de raccordement 25, par dévissage de l'écrou 29.

Dans le cas où l'on désire effectuer un changement de joint sur la buselure 18 ou encore une réparation ou un remplacement d'un élément quelconque du conduit de guidage, on peut mettre en oeuvre de manière très simple le procédé décrit plus haut consistant à déplacer vers l'amont le doigt de gant à l'intérieur du conduit de guidage et à boucher de manière étanche l'extrémité ouverte du doigt de gant et l'espace annulaire entre le doigt de gant et le conduit de guidage. En effet, après séparation de l'élément de raccordement 25 de l'extrémité du doigt de gant 20, on se trouve en présence d'une extrémité du doigt de gant entièrement lisse qu'il est possible de faire pénétrer à l'intérieur du conduit de guidage en utilisant un outil de forme adaptée.

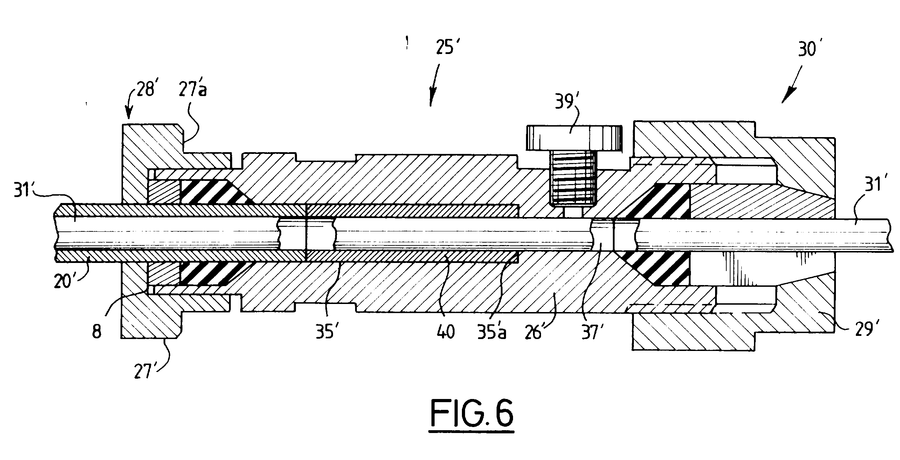

Sur la figure 6, on a représenté un second mode de réalisation d'un élément de raccordement suivant l'invention.

Les éléments correspondants sur les figures 4 et 5 d'une part et 6 d'autre part portent les mêmes repères. Toutefois, les éléments du dispositif représenté sur la figure 6 sont affectés du signe ' (prime).

L'élément de raccordement 25' comporte un corps 26' ayant la forme d'un manchon traversé par l'ouverture centrale sur toute sa longueur.

L'ouverture centrale du manchon 26' comporte à la suite d'une partie d'entrée à grand diamètre dans laquelle sont logés les éléments de la garniture d'étanchéité d'un moyen 28' de fixation et de passage étanche du doigt de gant 20', une partie lisse cylindrique 35' dont le diamètre est sensiblement égal ou légèrement inférieur au diamètre extérieur du doigt de gant 20'.

Dans le cas du mode de réalisation représenté sur la figure 6, le doigt de gant 20' constitue la gaine de protection d'un dispositif de mesure de paramètres physiques dans le coeur du réacteur comportant des sondes fixes espacées suivant la longueur d'un câble de mesure 31' logé à l'intérieur de la gaine 20' en forme doigt de gant.

Dans le cas de ce mode de réalisation, le conduit de mesure pénétrant dans la partie d'entrée de l'élément de raccordement 25' est constitué par la gaine 20' de protection du câble de mesure et l'élément cylindrique situé dans le prolongement du conduit de mesure 20' est constitué par le câble de mesure 31' qui doit être relié, à son extrémité opposée aux sondes de mesure placées à l'intérieur du conduit de mesure 20', à un ensemble d'exploitation des signaux de mesure disposé à l'intérieur du local de mesure du réacteur nucléaire.

Comme dans le cas de l'élément de raccordement 25 suivant le premier mode de réalisation, le moyen de fixation et de passage étanche 28' comporte une garniture d'étanchéité logée dans la partie d'entrée de l'alésage du manchon 26' qui peut être serrée de manière étanche contre la surface extérieure du conduit de mesure 20', par serrage de l'écrou 27' sur une extrémité filetée du manchon 26'. De même, le moyen de fixation et de passage étanche 30' comporte un élément de serrage cylindro-tronconique et un joint d'étanchéité constituant une garniture qui peut être serrée contre la surface extérieure de l'élément cylindrique 31' par vissage de l'écrou 29' sur la seconde partie d'extrémité filetée du manchon 26'.

De manière à déplacer les zones d'usure de la gaine 20' du câble de mesure, il est possible d'enfiler sur le câble de mesure préalablement au montage de l'élément de raccordement 25', une entretoise 40 qui est introduite, lors du montage de l'élément de raccordement 25' dans l'alésage 35', jusqu'au moment où son extrémité vient en butée contre l'épaulement 35'a de l'alésage du manchon 26'. La gaine 20' du câble de mesure vient elle-même en butée contre la seconde extrémité de l'entretoise 40. On peut ainsi modifier la position des zones d'usure de la gaine 20', entre deux périodes de fonctionnement du réacteur nucléaire.

Après une première période de fonctionnement du réacteur nucléaire, on peut placer les entretoises 40 dans le prolongement des gaines 20' des câbles de mesure du dispositif de mesure suivant l'invention, de manière que les gaines viennent se placer à l'intérieur de la cuve du réacteur nucléaire, dans une position décalée axialement par rapport à leur position pendant la première phase de fonctionnement du réacteur nucléaire.

Bien entendu, dans le cas du premier mode de réalisation, il est également possible de placer une entretoise analogue à l'entretoise 40 présentant des diamètres internes et externes identiques au diamètre d'un doigt de gant, en butée, à une extrémité, sur l'épaulement 35a et, à sa seconde extrémité sur l'extrémité du doigt de gant 20. On modifie ainsi la position des zones d'usure du doigt de gant dans lequel on déplace les sondes mobiles, à l'intérieur de la cuve du réacteur nucléaire.

Dans le cas de l'utilisation d'un dispositif à sondes fixes, comme représenté sur la figure 6, lorsque la gaine 20' en forme de doigt de gant d'un câble de mesure relié aux sondes fixes présente un perçage ou une fissure, l'eau sous pression du réacteur nucléaire pénétrant à l'intérieur de la gaine 20' reste confinée à l'intérieur de l'élément de raccordement 25' et ne peut s'échapper à l'intérieur du local de mesure. En effet, la garniture d'étanchéité du moyen de passage étanche 28' interdit toute fuite à la périphérie de la gaine 20' et la garniture d'étanchéité du moyen de passage étanche 30' empêche tout passage d'eau de refroidissement à la périphérie de l'élément cylindrique 31'. La présence d'eau sous pression dans la partie centrale 37' de l'ouverture du manchon 26' peut être détectée par un détecteur de fuite 39' constitué, par exemple, par un pressostat.

Bien entendu, l'élément de raccordement 25' selon le second mode de réalisation qui est représenté sur la figure 6 peut être relié à une buselure telle que la buselure 18 d'un conduit de guidage tel que représenté sur la figure 4, par l'intermédiaire de l'écrou 27' du moyen de fixation 28' à la première extrémité de l'élément de raccordement 25' qui est mis en appui et fixé, par l'intermédiaire d'un écrou 18b de la buselure, contre le corps de la buselure 18, avec interposition d'un joint d'étanchéité.

Le dispositif de mesure suivant l'invention, comportant des éléments de raccordement analogues aux éléments 25 ou 25' qui viennent d'être décrits, fixés sur les parties d'extrémité de chacun des conduits de mesure, à la sortie d'un conduit de guidage, permet de réaliser de manière très simple la séparation du conduit de mesure d'un élément prolongateur du conduit de mesure, pour déplacer le conduit de mesure à l'intérieur de son conduit de guidage, par exemple pour modifier la position de zones d'usure ou pour réaliser une réparation sur un élément du conduit de guidage. Le dispositif suivant l'invention permet également d'éviter toute fuite d'eau de refroidissement du réacteur dans le local de mesure dans le cas du perçage d'une gaine en forme de doigt de gant d'un conduit de mesure recevant des sondes en position fixe.

L'invention ne se limite pas aux modes de réalisation qui ont été décrits. C'est ainsi que le manchon constituant le corps de l'élément de raccordement suivant l'invention peut présenter une forme différente de celles qui ont été décrites.

Les moyens de fixation et de passage étanche situés aux extrémités du manchon de l'élément de raccordement peuvent également être réalisés de manière différente.

L'élément de de raccordement du dispositif suivant l'invention peut être fixé sur la buselure de passage du conduit de mesure d'une manière différente de celle qui a été décrite ou encore cet élément de raccordement peut être fixé sur un élément du conduit de guidage différent de la buselure de passage étanche.

L'invention s'applique aux dispositifs de mesure de paramètres physiques à l'intérieur du coeur d'un réacteur nucléaire, que ces dispositifs utilisent des sondes mobiles ou des sondes fixes.

## Revendications

1. Elément de reccordement (25, 25') pour un dispositif de mesure d'au moins un paramètre physique à l'intérieur du coeur d'un réacteur nucléaire comportant un conduit de mesure (20, 20') de forme allongée, un conduit de guidage (5, 19) du conduit de mesure (20, 20') entre un local de mesure (3) et le coeur du réacteur nucléaire disposé à l'intérieur d'une cuve (1), un moyen (18) de passage étanche du conduit de mesure (20, 20') à une extrémité du conduit de guidage (5, 19), situé dans le local de mesure (3) et un élément prolongateur (31, 31') du conduit de mesure (20, 20'), caractérisé par le fait que ledit élément effectue le raccordement d'une partie d'extrémité du conduit de mesure (20, 20') à l'élément prolongateur (31, 31') comportant un corps constitué par un manchon tubulaire (26, 26') comprenant suivant son axe, un premier alésage (35, 35') de réception de la partie d'extrémité du conduit de mesure (20, 20') présentant une surface cylindrique entièrement lisse, s'étendant entre une première extrémité axiale du manchon (26, 26') et un épaulement (35a, 35'a) à l'intérieur du manchon (26, 26'), un second alésage (36, 36') de réception de l'élément cylindrique prolongateur lisse s'étendant jusqu'à la seconde extrémité axiale du manchon (26, 26'), un premier moyen démontable (28, 28') de fixation et de passage étanche du conduit de mesure (20, 20') à la première extrémité du manchon (26, 26') pour assurer le passage étanche du conduit de mesure (20, 20') dans le premier alésage (35, 35') du manchon (26, 26') et un second moyen démontable (30, 30') de fixation et de passage étanche de l'élément prolongateur cylindrique lisse à la seconde extrémité du manchon (26, 26') pour assurer le passage étanche de l'élément prolongateur cylindrique lisse dans le second alésage (36, 36') du manchon (26, 26').

2. Dispositif de mesure suivant la revendication 1, caractérisé par le fait que le premier moyen de fixation et de passage étanche démontable (28, 28') et le second moyen de fixation et de passage étanche démontable (30, 30') comportent chacun un écrou (27, 27', 29, 29') en prise avec une partie d'extrémité filetée (26a, 26b) de la surface extérieure du manchon (26) et une garniture d'étanchéité dont le serrage peut être assuré par l'écrou (27, 27', 29, 29').

3. Dispositif de mesure suivant la revendication 2, caractérisé par le fait que chacune des garnitures d'étanchéité des moyens de fixation et de passage étanche (28, 28', 30, 30') comporte une pièce de serrage annulaire (33, 37) et un joint annulaire (34, 38) disposés autour du conduit de mesure (20, 20') et autour de l'élément cylindrique lisse (31, 31') respectivement, la bague de serrage (33, 37) étant intercalée entre une face du joint (34, 38) et une portée d'appui de l'écrou correspondant (27, 27', 29, 29').

4. Dispositif de mesure suivant la revendication 3, caractérisé par le fait que l'une au moins des pièces de serrage annulaire (33, 37) comporte au moins une fente sur toute son épaisseur pour permettre une rétraction diamétrale de la pièce de serrage autour de l'élément cylindrique (31, 31') du conduit de mesure (20, 20') au cours du serrage de la garniture d'étanchéité.

5. Dispositif de mesure suivant l'une quelconque des revendications 3 et 4, caractérisé par le fait que la pièce annulaire de serrage (33, 37) est en acier inoxydable et que le joint annulaire (34, 38) est en graphite.

6. Dispositif suivant l'une quelconque des revendications 2 à 5, caractérisé par le fait que les garnitures d'étanchéité des moyens de fixation et de passage étanche (28, 28', 30, 30') sont disposées à l'intérieur d'une partie d'extrémité à diamètre élargi d'un alésage interne du manchon (26, 26').

7. Dispositif de mesure suivant la revendication 6, caractérisé par le fait que les parties d'extrémité à diamètre élargi de l'alésage du manchon (26) comportent une surface d'appui tronconique à leur extrémité située vers l'intérieur du manchon (26) constituant une surface de butée pour un joint d'étanchéité annulaire (34, 38).

8. Dispositif de mesure suivant l'une quelconque des revendications 1 à 7, caractérisé par le fait que le manchon (26, 26') comporte entre le premier alésage (35, 35') et le second alésage (36, 36') un troisième alésage central (37) joignant le premier alésage (35, 35') et le second alésage (36, 36') qui est mis en communication avec un détecteur de fuite (39, 39').

9. Dispositif de mesure suivant l'une quelconque des revendications 1 à 8, caractérisé par le fait que l'élément de raccordement (25, 25') comporte une partie (27, 27') permettant la fixation de l'élément de raccordement (25, 25') sur une partie du moyen de passage étanche (18) du conduit de mesure (20, 20').

10. Dispositif suivant la revendication 9, caractérisé par le fait que l'élément de raccordement (25, 25') est fixé sur un corps tubulaire d'une buselure (18) de passage étanche du conduit de mesure (20, 20') par un écrou (18b) vissé sur une partie filetée du corps de la buselure (18) venant en appui sur une pièce (27) du premier moyen (28) de fixation et de passage étanche du conduit de mesure (20, 20') dans le premier alésage (35, 35') du manchon (26, 26') de l'élément de raccordement (25, 25').

11. Dispositif de mesure suivant l'une quelconque des revendications 1 à 10, caractérisé par le fait que le conduit de mesure (20, 20') est un doigt de gant pour le déplacement de sondes mobiles de mesure d'un paramètre physique dans le coeur du réacteur nucléaire et que l'élément cylindrique lisse prolongateur (31, 31') est un élément tubulaire assurant le passage des sondes de mesure à partir d'un ensemble de déplacement et de mesure dans le local de mesure (3) jusqu'aux conduits de mesure (20, 20').

12. Dispositif suivant l'une quelconque des revendications 1 à 10, caractérisé par le fait que l'élément cylindrique lisse prolongateur est un câble de mesure sur lequel sont fixées des sondes de mesure placées en position fixe à l'intérieur du conduit de mesure (20, 20').

13. Dispositif suivant l'une quelconque des revendications 1 à 12, caractérisé par le fait qu'il comporte de plus une entretoise (40) intercalée entre l'extrémité du conduit de mesure (20') et l'épaulement interne (35'a) du premier alésage (35') du manchon (26'), à l'intérieur du premier alésage (35') du manchon (26') de l'élément de raccordement (25').

## Patentansprüche

1. Verbindungselement (25, 25') für eine Vorrichtung zum Messen wenigstens eines physikalischen Parameters im Inneren des Kerns eines Kernreaktors, mit einer Meßleitung (22, 22') von länglicher Form, einer Führungsleitung (5, 19) der Meßleitung (20, 20') zwischen einem Meßort (3) und dem Kern des Kernreaktors, der im Inneren eines Behälters (1) angeordnet ist, einer dichten Durchtrittseinrichtung (18) der Meßleitung (20, 20') zu einem Ende der Führungsleitung (5, 19), die in dem Meßort (3) angeordnet ist, und einem Verlängerungselement (31, 31') der Meßleitung (20, 20'), dadurch gekennzeichnet, daß das genannte Element die Verbindung eines Endabschnitts der Meßleitung (20, 20') zu dem Verlängerungselement (31, 31') erzeugt, das einen Körper aufweist, der aus einer ringförmigen Muffe (26, 26') gebildet ist, die entlang ihrer Achse eine erste Aufnahmeausnehmung (35, 35') des Endabschnitts der Meßleitung (20, 20'), die eine vollkommen glatte zylindrische Oberfläche aufweist, die sich zwischen dem ersten axialen Ende der Muffe (26, 26') und einer Schulter (35a, 35'a) im Inneren der Muffe (26, 26') erstreckt, eine zweite Aufnahmeausnehmung (36, 36') des glatten zylindrischen Verlängerungselements, die sich bis zum zweiten axialen Ende der Muffe (26, 26') erstreckt, eine erste entfernbare Einrichtung (28, 28') zum Befestigen und zum dichtenden Hindurchtritt der Meßleitung (20, 20') zum ersten Ende der Muffe (26, 26') um den dichtenden Durchtritt der Meßleitung (20, 20') in der ersten Ausnehmung (35, 35') der Muffe (26, 26') sicherzustellen, und eine zweite entfernbare Einrichtung (30, 30') aufweist, zum Befestigen und zum dichtenden Hindurchtritt des ersten zylindrischen glatten Verlängerungselements zum zweiten Ende der Muffe (26, 26), um den dichtenden Hindurchtritt des zylindrischen glatten Verlängerungselements in der zweiten Ausnehmung (36, 36') der Muffe (26, 26') sicherzustellen.

2. Meßvorrichtung nach Anspruch 1, dadurch gekennzeichnet, daß die erste Befestigungs- und entfernbare dichtende Hindurchtrittseinrichtung (28, 28') und die zweite entfernbare Einrichtung zum Befestigen und dichtenden Hindurchtritt (30, 30') jeweils eine Mutter (27, 27', 29, 29') aufweisen, in Eingriff mit einem Gewindeendabschnitt (26a, 26b) der äußeren Oberfläche der Muffe (26) und einer Dichtungsgarnitur, deren Klemmen durch die Mutter (27, 27', 29, 29') sichergestellt werden kann.

3. Meßvorrichtung nach Anspruch 2, dadurch gekennzeichnet, daß eine jede der Dichtungsgarnituren der Einrichtungen zum Befestigen und des dichtenden Durchtritts (28, 28', 30, 30') ein ringförmiges Klemmteil (33, 37) und eine ringförmige Dichtung (34, 38) aufweist, die um die Meßleitung (20, 20') bzw. um das glatte zylindrische Element (31, 31') angeordnet sind, wobei der Dichtungsring (33, 37) zwischen eine Fläche der Dichtung (34, 38) und eine Anschlagstütze der entsprechenden Mutter (27, 27', 29, 29') eingeklemmt ist.

4. Meßvorrichtung nach Anspruch 3, dadurch gekennzeichnet, daß wenigstens eines der ringförmigen Klemmteile (33, 37) über seine ganze Dicke wenigstens einen Schlitz aufweist, um ein diametrales Herausziehen des Klemmteils um das zylindrische Element (31, 31') der Meßleitung (20, 20') während des Klemmens der Dichtungsgarnitur zu ermöglichen.

5. Meßvorrichtung nach Anspruch 3 oder 4, dadurch gekennzeichnet, daß das ringförmige Klemmelement (33, 37) aus nichtrostendem Stahl ist, und daß die ringförmige Dichtung (34, 38) aus Graphit ist.

6. Vorrichtung nach einem der Ansprüche 2 bis 5, dadurch gekennzeichnet, daß die Dichtungsgarnituren der Einrichtungen zum Befestigen und dichtenden Hindurchtritt (28, 28', 30, 30') im Inneren eines Endabschnitts mit vergrößertem Durchmesser einer inneren Ausnehmung der Muffe (26, 26') angeordnet sind.

7. Meßvorrichtung nach Anspruch 6, dadurch gekennzeichnet, daß die Endabschnitte mit vergrößertem Durchmesser der Ausnehmung der Muffe (26) eine stumpfförmige Andruckoberfläche an ihrem Ende, das zu dem Inneren der Muffe (26) angeordnet ist, aufweisen, die eine Anschlagoberfläche für eine ringförmige Dichtung (34, 38) bildet.

8. Meßvorrichtung nach einem der Ansprüche 1 bis 7, dadurch gekennzeichnet, daß die Muffe (26, 26') zwischen der ersten Ausnehmung (35, 35') und der zweiten Ausnehmung (36, 36') eine dritte zentrale Ausnehmung (37) aufweist, die erste Ausnehmung (35, 35') und die zweite Ausnehmung (36, 36') verbindet, die mit einem Leckdetektor (39, 39') in Verbindung gesetzt ist.

9. Meßvorrichtung nach einem der Ansprüche 1 bis 8, dadurch gekennzeichnet, daß das Verbindungselement (25, 25') einen Abschnitt (27, 27') aufweist, der die Befestigung des Verbindungselements (25, 25') an einem Abschnitt der Hindurchtritteinrichtung (18) der Meßleitung (20, 20') ermöglicht.

10. Vorrichtung nach Anspruch 9, dadurch gekennzeichnet, daß das Verbindungselement (25, 25') an einem rohrförmigen Körper eines Überzugs (18) des dichtenden Hindurchtritts der Meßleitung (20, 20') durch eine Mutter (18b) befestigt ist, die auf einem Gewindeabschnitt des Körpers des Überzugs (18) aufgeschraubt ist, wobei sie in Anlage gegen ein Teil (27) der ersten Einrichtung (28) zum Befestigen und dichtenden Hindurchtritt der Meßleiter (20, 20') in der ersten Ausnehmung (35, 35') der Muffe (26, 26') des Verbindungselements (25, 25') kommt.

11. Meßvorrichtung nach einem der Ansprüche 1 bis 10, dadurch gekennzeichnet, daß die Meßleitung (20, 20') ein Handschuhfinger für die Bewegung von mobilen Meßsonden eines physikalischen Parameters in dem Kern des Kernreaktors ist, und daß das zylindrische glatte Verlängerungselement (31, 31') ein rohrförmiges Element ist, daß den Hindurchtritt der Meßsonden ausgehend von einer Bewegungsanordnung und Meßanordnung in den Meßort (3) bis zu den Meßleitungen (20, 20') sicherstellt.

12. Vorrichtung nach einem der Ansprüche 1 bis 10, dadurch gekennzeichnet, daß das zylindrische glatte Verlängerungselement ein Meßkabel ist, an dem Meßsonden befestigt sind, die in fester Position im Inneren der Meßleitung (20, 20') angeordnet sind.

13. Vorrichtung nach einem der Ansprüche 1 bis 12, dadurch gekennzeichnet, daß sie darüber hinaus eine Zwischenhülse (40) aufweist, die zwischen das Ende der Meßleitung (20') und der inneren Schulter (35'a) der ersten Ausnehmung (35') der Muffe (26') im Inneren der ersten Ausnehmung (35') der Muffe (26') des Verbindungselements (25') zwischengesetzt ist.

## Claims

1. Connecting element (25, 25') for an apparatus for measuring at least one physical parameter within a nuclear reactor core comprising a measuring conduit (20, 20') of elongated shape, a conduit (5, 19) for guiding the measuring conduit (20, 20') between a measuring location (3) and the nuclear reactor core disposed inside a tank (1), means (18) for the hermetic passage of the measuring conduit (20, 20') at one end of the guide conduit (5, 19), situated at the measuring location (3) and a member (31, 31') for extending the measuring conduit (20, 20'), characterised by the fact that said element brings about the connection of an end part of the measuring conduit (20, 20') to the extension member (31, 31') comprising a body constituted by a tubular sleeve (26, 26') comprising along its axis, a first bore (35, 35') for receiving the end part of the measuring conduit (20, 20') comprising an entirely smooth cylindrical surface, extending between a first axial end of the sleeve (26, 26') and a shoulder (35a, 35'a) inside the sleeve (26, 26'), a second bore (36, 36') for receiving the smooth cylindrical extension member extending as far as the second axial end of the sleeve (26, 26'), a first removable means (28, 28') for fixing and for the hermetic passage of the measuring conduit (20, 20') at the first end of the sleeve (26, 26') in order to ensure the hermetic passage of the measuring conduit (20, 20') in the first bore (35, 35') of the sleeve (26, 26') and second removable means (30, 30') for fixing and for the hermetic passage of the smooth cylindrical extension member at the second end of the sleeve (26, 26') in order to ensure the hermetic passage of the smooth cylindrical extension member in the second bore (36, 36') of the sleeve (26, 26').

2. Measuring apparatus according to Claim 1, characterised by the fact that the first means (28, 28') for fixing and for the removable hermetic passage and the second means (30, 30') for fixing and for the removable hermetic passage each comprise a nut (27, 27', 29, 29') in engagement with a threaded end part (26a, 26b) of the outer surface of the sleeve (26) and a gasket whereof the clamping may be ensured by the nut (27, 27', 29, 29').

3. Measuring apparatus according to Claim 2, characterised by the fact that each of the gaskets of the means (28, 28', 30, 30') for fixing and for the hermetic passage comprises an annular clamping member (33, 37) and an annular seal (34, 38) disposed around the measuring conduit (20, 20') and around the smooth cylindrical member (31, 31') respectively, the clamping ring (33, 37) being interposed between one side of the seal (34, 38) and a support surface of the corresponding nut (27, 27', 29, 29').

4. Measuring apparatus according to Claim 3, characterised by the fact that at least one of the annular clamping parts (33, 37) comprises at least one slot over its entire thickness in order to allow a diametral retraction of the clamping member about the cylindrical member (31, 31') of the measuring conduit (20, 20') during the clamping of the gasket.

5. Measuring apparatus according to one of Claims 3 and 4, characterised by the fact that the annular clamping member (33, 37) is made of stainless steel and the annular seal (34, 38) is made of graphite.

6. Apparatus according to one of Claims 2 to 5, characterised by the fact that the gaskets of the means (28, 28', 30, 30') for fixing and for the hermetic passage are disposed inside an end part with an enlarged diameter of an inner bore of the sleeve (26, 26').

7. Measuring apparatus according to Claim 6, characterised by the fact that the end parts of enlarged diameter of the bore in the sleeve (26) comprise a frustoconical support surface at their end situated towards the inside of the sleeve (26) constituting an abutment surface for an annular gasket (34, 38).

8. Measuring apparatus according to one of Claims 1 to 7, characterised by the fact that the sleeve (26, 26') comprises between the first bore (35, 35') and the second bore (36, 36') a third central bore (37) joining the first bore (35, 35') and the second bore (36, 36') which is placed in communication with a leakage detector (39, 39').

9. Measuring apparatus according to one of Claims 1 to 8, characterised by the fact that the connecting element (25, 25') comprises a part (27, 27') allowing the fixing of the connecting element (25, 25') to a part of the means (18) for the hermetic passage of the measuring conduit (20, 20').

10. Apparatus according to Claim 9, characterised by the fact that the connecting element (25, 25') is fixed to a tubular body of a bush (18) for the hermetic passage of the measuring conduit (20, 20') by a nut (18b) screwed onto a threaded part of the body of the bush (18) coming into abutment with a member (27) of the first means (28) for fixing and for the hermetic passage of the measuring conduit (20, 20') in the first bore (35, 35') of the sleeve (26, 26') of the connecting element (25, 25').

11. Measuring apparatus according to one of Claims 1 to 10, characterised by the fact that the measuring conduit (20, 20') is a glove finger for the movement of movable probes for measuring a physical parameter in the nuclear reactor core and that the smooth cylindrical extension member (31, 31') is a tubular member ensuring the passage of the measuring probes from a displacement and measuring arrangement at the measuring location (3) as far as the measuring conduits (20, 20').

12. Apparatus according to one of Claims 1 to 10, characterised by the fact that the smooth cylindrical extension member is a measuring cable to which are fixed measuring probes placed in a fixed position inside the measuring conduit (20, 20').

13. Apparatus according to one of Claims 1 to 12, characterised by the fact that in addition it comprises a spacer member (40) interposed between the end of the measuring conduit (20') and the inner shoulder (35'a) of the first bore (35') of the sleeve (26'), inside the first bore (35') of the sleeve (26') of the connecting element (25').
